# EUROPÄISCHE PATENTANMELDUNG

(11) **EP 1 772 425 A2**
(43) Veröffentlichungstag der Anmeldung: **11.04.2007**
(21) Anmeldenummer: 06020502.8
(22) Anmeldetag: 29.09.2006
(51) Int. Cl.: B67C 11/02

(54) **Trichter**

(30) Priorität: 07.10.2005 DE 202005015734 U; 17.03.2006 DE 202006004283 U
(71) Anmelder: Killius, Marianne, 79314 Kenzingen (DE); Baumann, Albrecht, 77966 Kappel-Grafenhausen (DE)
(72) Erfinder: Killius, Marianne, 79314 Kenzingen (DE); Baumann, Albrecht, 77966 Kappel-Grafenhausen (DE)
(74) Vertreter: Goy, Wolfgang

(57) **Zusammenfassung**

Die Erfindung betrifft einen einfachen Trichter 1 zum Abfüllen von Substanzen in ein Behältnis. Der Trichter 1 ist durch einen Sektor eines Kreisrings 2 eines flexiblen Flächenmaterials gebildet, dessen beide Enden zu dem Trichter 1 miteinander verbindbar sind.

## Beschreibung

Die Erfindung betrifft einen Trichter zum Abfüllen von Substanzen in ein Behältnis.

Um schüttfähige oder fließfähige Substanzen durch eine enge Öffnung in ein Behältnis abfüllen zu können, werden vorteilhafterweise Trichter verwendet. Bei diesen Substanzen kann es sich um körniges sowie pulverförmiges Material handeln, aber auch um Flüssigkeiten. Ein Beispiel ist das Abfüllen von Pfefferkörnern in Pfeffermühlen. Bei dem Trichter handelt es sich um ein konisches Gebilde, dessen größere, obere Öffnung die Einfüllöffnung und dessen kleinere, untere Öffnung die Austrittsöffnung definiert.

Trichter aus Metall oder Kunststoff sind hinlänglich bekannt. Sie haben allerdings den Nachteil, daß sie im Nichtgebrauchszustand sehr sperrig sind und viel Platz beanspruchen. Außerdem ist es in der Regel notwendig, den Trichter nach jedem Gebrauch zu reinigen. Schließlich sind die Trichter teuer.

Davon ausgehend liegt der Erfindung die **Aufgabe** zugrunde, einen einfacheren Trichter zum Abfüllen zum Substanzen in ein Behältnis zu schaffen.

Die technische **Lösung** ist gekennzeichnet durch die Merkmale im Kennzeichen des Anspruchs 1.

Dadurch ist ein Trichter zum Abfüllen von Substanzen in ein Behältnis geschaffen, welcher einfach in der Herstellung sowie einfach im Gebrauch ist. Die Grundidee besteht darin, einen Kreisringsektor aus einem flexiblen Flächenmaterial bereitzustellen. Dieser Kreisringsektor kann aus einem Halbmaterial ausgeschnitten oder ausgestanzt sein. Er wird zu einem konischen Trichter zusammengerollt, und die beiden Sektorenden werden miteinander verbunden, so daß der Trichter seine konische Form beibehält. Der Vorteil besteht darin, daß der Trichter sehr einfach in der Herstellung ist, da lediglich die vorgenannten Schritte durchgeführt werden müssen. Im Nichtgebrauchszustand ist der Kreisringsektor absolut flach und kann somit ohne großen Platzaufwand gelagert werden. Erst wenn der Trichter zum Abfüllen von Substanzen in ein Behältnis benötigt wird, wird der Kreisringsektor entsprechend gerollt und die Enden miteinander verbunden.

Vorzugsweise handelt es sich gemäß der Weiterbildung in Anspruch 2 bei dem Flächenmaterial um Papier, Karton, Kunststoff oder Metall. Entsprechende Folien können auf technisch einfache Weise hergestellt und ausgeschnitten bzw. ausgestanzt werden.

Die Weiterbildung gemäß Anspruch 3 schlägt eine erste Möglichkeit zum Verbinden der beiden Enden des Kreisringsektors dar. Die Grundidee besteht in einem einfachen Stecksystem, wobei das eine Ende des Kreisringsektors eine Lasche und das andere Ende ein oder mehrere, dazu korrespondierende Schlitze aufweist, in welche die Lasche hineingesteckt werden kann.

Eine Alternative hierzu schlägt Anspruch 4 vor. Die Grundidee besteht darin, daß zum Verbinden der beiden Enden ein Klettverschluß vorgesehen ist. Dies stellt eine sehr stabile Verbindung dar, auch wenn im Laufe der Zeit bei einer Wiederverwendung des Trichters Verschmutzungen auftreten sollten.

Eine dritte Möglichkeit schlägt Anspruch 5 vor. Hier dient als Verbindungseinrichtung ein Klebestreifen. Auch hier gibt es heutzutage Sorten von Klebestreifen, welche eine mehrfache Verwendung des Trichters erlauben, wenn also nach dem Gebrauch des Trichters die Klebeverbindung wieder gelöst und der flache Kreisringsektor gelagert wird, um dann erneut bei Bedarf den Trichter zu schaffen.

Eine vierte Möglichkeit der Befestigung schlägt schließlich Anspruch 6 vor. Als Verbindungseinrichtung dient hier eine Klammer, wie sie vom Grundprinzip her von Büroklammern bekannt ist. Diese Klammer erstreckt sich vorzugsweise im wesentlichen über die gesamte Höhe des Trichters, so daß die überlappenden Enden des zusammengerollten Kreisrings sicher gehalten werden. Es ist lediglich erforderlich, die Klammer von oben auf den Trichter aufzuschieben. Bei der Klammer handelt es sich vorzugsweise um ein Kunststoffteil, und zwar insbesondere um einen Ausschnitt aus einem flächigen Kunststoffmaterial. Die Klammer besitzt außen einen Rahmen sowie in der inneren Öffnung eine flexible Zunge. Dadurch ist das Grundprinzip einer Büroklammer geschaffen.

Um den Trichter unter Verwendung dieser Klammer besser halten zu können, weist diese Klammer am oberen Ende vorzugsweise einen Griff auf. Dieser steht vorzugsweise radial ab. Dieser Griff kann derart ausgebildet sein, daß er nur mit den Fingern gehalten wird. Er kann aber auch ausgestaltet sein, daß er mit der kompletten Hand gehalten werden kann. Vorzugsweise ist die Klammer nach wie vor aus einem ebenen Kunststoffstück gebildet, wobei durch einen entsprechenden Knickbereich der Griff nach außen abgeknickt werden kann.

Wie zuvor bereits erwähnt, schlägt eine Weiterbildung gemäß Anspruch 8 vor, daß die beiden Enden des Trichters lösbar miteinander verbunden sind. Dies bedeutet, daß der Trichter mehrfach verwendet werden kann, indem nach einem Gebrauch die Verbindung der Enden des Kreisringsektors gelöst wird und somit der Trichter in seiner flachen Ausgangsform gelagert werden kann. Bei einem erneuten Gebrauch des Trichters erfolgt eine erneute Verbindung der Enden.

Die Weiterbildung gemäß Anspruch 9 hat den Vorteil, daß der Trichter an unterschiedlich große Öffnungen des Behältnisses angepaßt werden kann. Ist die Öffnung relativ klein, wird der Kreisringsektor entsprechend stark zusammengerollt, während bei einer größeren Öffnung des Behältnisses der Kreisringsektor so gerollt wird, daß die untere Austrittsöffnung relativ groß ist.

Die Weiterbildung gemäß Anspruch 10 hat den Vorteil, daß durch die Markierungen der Benutzer weiß, wie stark er für einen bestimmten Anwendungszweck den Kreisringsektor aufwickeln muß. Es ist lediglich notwendig, daß sich der Benutzer einen bestimmten Markierungspunkt merken muß.

Die Weiterbildung gemäß Anspruch 11 schlägt vor, daß mehrere Kreisringsektoren übereinandergestapelt bevorratet sind. Dies hat den Vorteil, daß die Trichter für einen Einmalgebrauch vorgesehen und gedacht sind.

Die Weiterbildung hiervon gemäß Anspruch 12 schlägt vor, daß die Kreisringe einen Abreißblock bilden. Dies hat den Vorteil, daß eine einfache Aufbewahrung gewährleistet ist.

Ausführungsbeispiele eines erfindungsgemäßen Trichters zum Abfüllen von Substanzen in ein Behältnis werden nachfolgend anhand der Zeichnungen beschrieben. In diesen zeigt:
- Fig. 1: eine erste Ausführungsform des Kreisringsektors zur Schaffung des Trichters;
- Fig. 2: eine zweite Ausführungsform des Kreisringsektors zur Schaffung des Trichters;
- Fig. 3: eine perspektivische Ansicht eines Abreißblockes mit mehreren Kreisringsektoren;
- Fig.4: eine perspektivische Ansicht eines Trichters, hergestellt mit einem Kreisringsektor, wie er in Fig. 2 dargestellt ist;
- Fig. 5: ein erstes Anwendungsbeispiel des Trichters zum Abfüllen von Pfefferkörnern in eine Pferrermühle;
- Fig. 6: ein zweites Anwendungsbeispiel des Trichters zum Abfüllen von Flüssigkeiten;
- Fig. 7: eine perspektivische Ansicht eines Trichters mit einer modifizierten Ausführungsform zum Fixieren der beiden Enden des Kreisringes in Form einer Klammer;
- Fig. 8: eine Darstellung entsprechend der in Fig. 7 mit aufgeschobener Klammer.

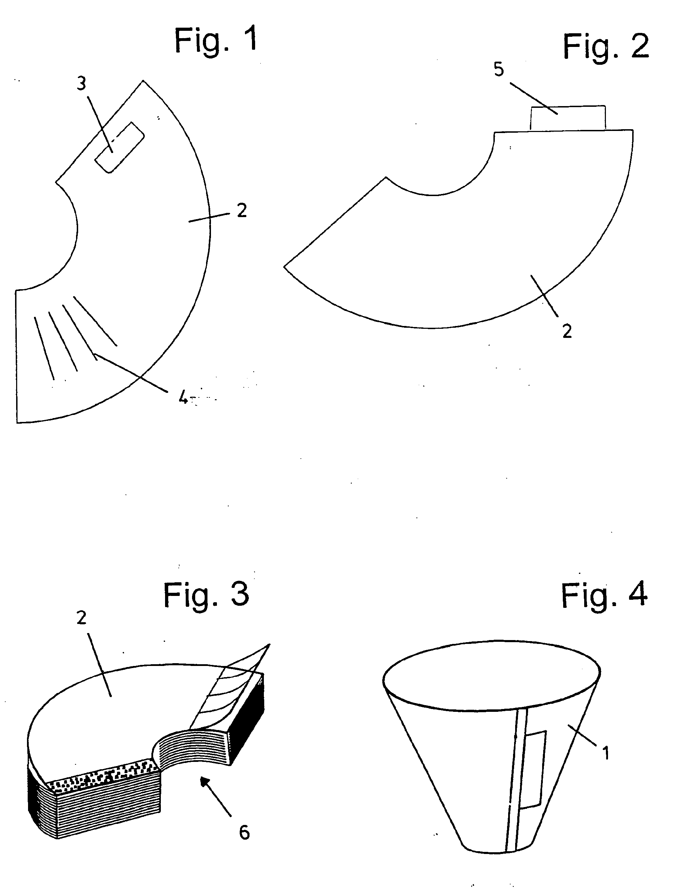

Fig. 1 zeigt ein erstes Ausführungsbeispiel eines Ausgangsmaterials zur Schaffung eines Trichters 1. Das Ausgangsmaterial ist durch den Sektor eines Kreisringes 2 geschaffen. Dieser Kreisring 2 besteht aus einem flexiblen Flächenmaterial, beispielsweise aus Papier, Karton, Kunststoffolie oder aus einer Metallfolie.

Die Grundidee dieses Kreisringes 2 zur Schaffung eines Trichters 1 besteht darin, daß die beiden Enden des Sektors des Kreisringes 2 miteinander verbunden werden. In dem dargestellten Ausführungsbeispiel dient als Verbindungseinrichtung am einen Ende eine ausgeschnittene oder ausgestanzte Lasche 3. Das andere Ende besitzt mehrere Schlitze 4.

Die Funktionsweise ist wie folgt:
Der Sektor des Kreisringes 2 wird zu einem konusförmigen Trichter 1 gerollt und die Enden durch Einführen der Lasche 3 in den jeweiligen Schlitz 4 gesichert. Nachdem der Trichter 1 seine Funktion erfüllt hat, kann die Verbindung der beiden Enden des Kreisringes 2 wieder gelöst werden, so daß das flachere Flächenmaterial entsteht, wie es in Fig. 1 dargestellt ist.

Fig. 2 zeigt eine alternative Ausführungsform, welche sich jedoch hinsichtlich der in Fig. 1 dargestellten Ausführungsform nur dadurch unterscheidet, wie die beiden Enden des Kreisringes 2 miteinander verbunden werden. Hier ist als Verbindungseinrichtung ein Klebestreifen 5 vorgesehen.

Die Funktionsweise ist vom Grundprinzip her identisch. Der Kreisring 2 wird gerollt. Allerdings erfolgt hier die Verbindung der beiden Enden des Kreisringes 2 durch den Klebestreifen 5. Der so geschaffene Trichter ist in Fig. 4 dargestellt.

Fig. 3 zeigt mehrere Kreisringe 2, welche zu einem Abreißblock 6 übereinandergestapelt sind.

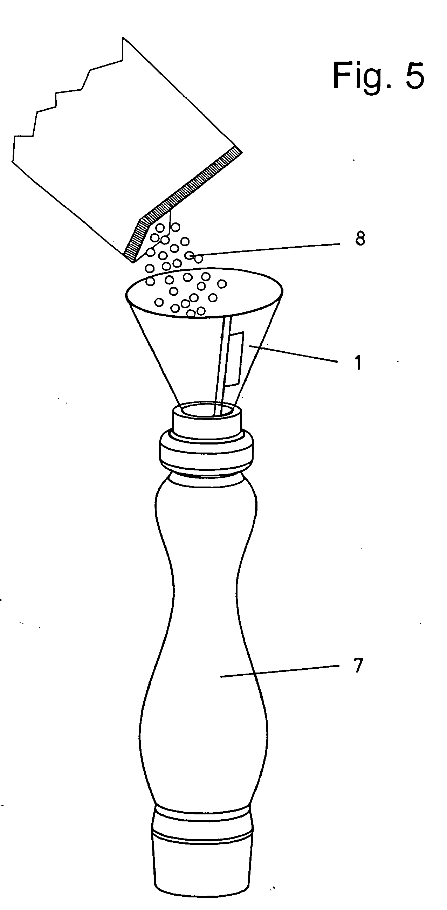

Fig. 5 zeigt ein spezielles Anwendungsgebiet des erfindungsgemäßen Trichters 1. Und zwar ist ein Behältnis 7 in Form einer Pfeffermühle vorgesehen. Auf die obere Öffnung dieser Pfeffermühle wird der zuvor beschriebene Trichter 1 aufgesteckt. Durch entsprechendes Rollen des Kreisringes 2 kann die untere Austrittsöffnung des Trichters 1 der oberen Öffnung der Pfeffermühle angepaßt werden. Nach dem Aufstecken des Trichters 1 auf die Pfeffermühle kann die Substanz 8, nämlich die Pfefferkörner problemlos eingefüllt werden.

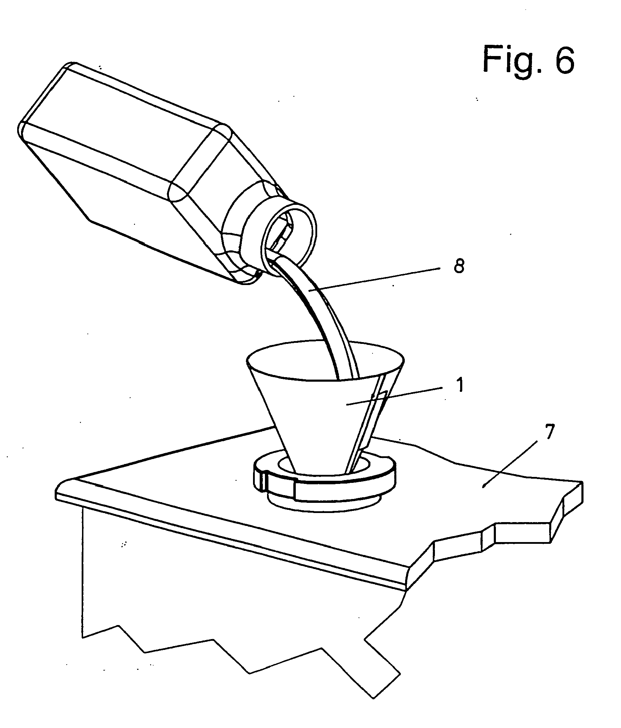

Ein weiteres Ausführungsbeispiel zeigt Fig. 6. Hier wird eine flüssige Substanz 8 in ein Behältnis 7 eingefüllt. Es kann sich beispielsweise bei dieser Substanz 8 um Motoröl und bei dem Behältnis 7 um den Ölraum eines Motors handeln.

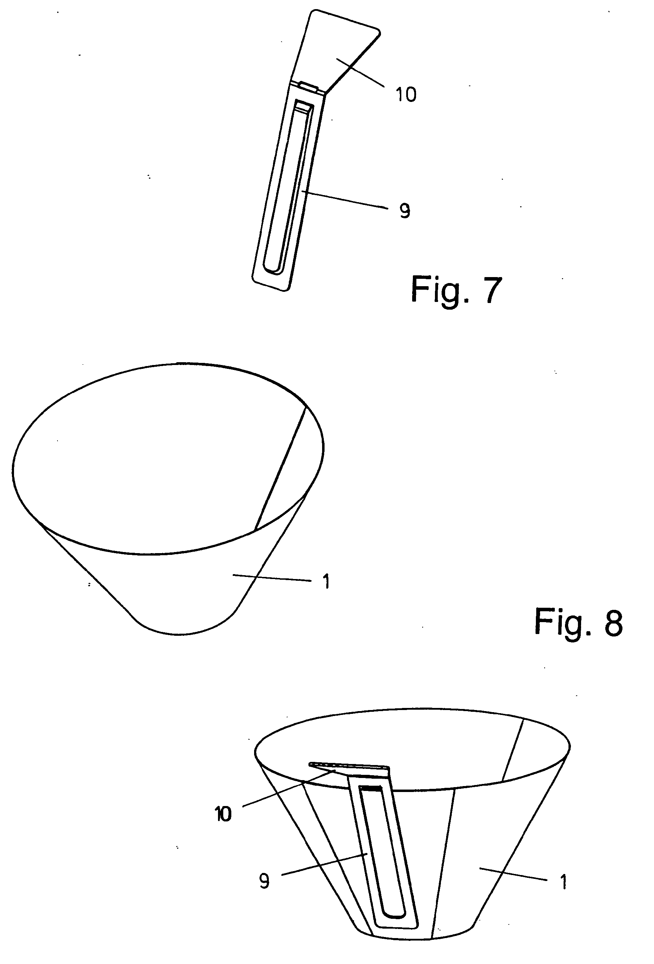

Fig. 7 und 8 zeigen eine modifizierte Ausführungsform zum Fixieren der beiden Enden des Kreisrings 2. Als Fixiereinrichtung dient hier eine Klammer 9, wie sie vom Grundprinzip her von Büroklammern her bekannt ist. Diese Klammer 9 insbesondere aus Kunststoff besitzt einen länglichen Rahmen, in welchem im Innern eine flexible Zunge angeordnet ist. Am oberen Ende befindet sich ein abgewinkelter Griff 10. Dieser kann für den Gebrauchszustand nach außen gebogen werden.

Die Funktionsweise ist wie folgt:
Der Kreisring 2 wird zusammengerollt, so daß die beiden Enden überlappend angeordnet sind. Anschließend wird die Klammer 9 von oben aufgesteckt, wobei sich die Klammer 9 im wesentlichen über die gesamte Höhe des Trichters 1 erstreckt. Dadurch ist der zusammengerollte Kreisring 2 über seine gesamte Höhe sicher gehalten. Zur einfachen Handhabung des Trichters 1 dient der abgewinkelte Griff 10. Im dargestellten Ausführungsbeispiel kann dieser Griff 10 mit den Fingern gehalten werden. Es ist aber auch denkbar, daß der Griff 10 eine derartige Länge aufweist, daß er mit der gesamten Hand gehalten werden kann.

### Bezugszeichenliste

- 1: Trichter
- 2: Kreisring
- 3: Lasche
- 4: Schlitze
- 5: Klebestreifen
- 6: Abreißblock
- 7: Behältnis
- 8: Substanz
- 9: Klammer
- 10: Griff

## Patentansprüche

1. Trichter (1) zum Abfüllen von Substanzen (8) in ein Behältnis (7),
**dadurch gekennzeichnet,**
**daß** der Trichter (1) durch einen Sektor eines Kreisrings (2) eines flexiblen Flächenmaterials gebildet ist, dessen beide Enden zu dem Trichter (1) miteinander verbindbar sind.

2. Trichter nach dem vorhergehenden Anspruch,
**dadurch gekennzeichnet,**
**daß** das Flächenmaterial aus Papier, Karton, Kunststoff oder Metall besteht.

3. Trichter nach Anspruch 1 oder 2,
**dadurch gekennzeichnet,**
**daß** die beiden Enden des Kreisrings (2) zusammengesteckt sind.

4. Trichter nach Anspruch 1 oder 2,
**dadurch gekennzeichnet,**
**daß** die beiden Enden des Kreisrings (2) durch einen Klettverschluß miteinander verbunden sind.

5. Trichter nach Anspruch 1 oder 2,
**dadurch gekennzeichnet,**
**daß** die beiden Enden des Kreisrings (2) durch einen Klebestreifen (5) miteinander verbunden sind.

6. Trichter nach Anspruch 1 oder 2,
**dadurch gekennzeichnet,**
**daß** die beiden Enden des Kreisrings (2) durch eine aufgeschobene Klammer (9) miteinander verbunden sind.

7. Trichter nach Anspruch 6,
**dadurch gekennzeichnet,**
**daß** die Klammer (9) an ihrem oberen Ende einen Griff (10) aufweist.

8. Trichter nach einem der vorhergehenden Ansprüche,
**dadurch gekennzeichnet,**
**daß** die beiden Enden des Trichters (1) lösbar miteinander verbunden sind.

9. Trichter nach einem der vorhergehenden Ansprüche,
**dadurch gekennzeichnet,**
**daß** der Kreisring (2) zur Schaffung unterschiedlich großer Austrittsöffnungen des Trichters (1) unterschiedlich stark rollbar ist sowie dessen Enden entsprechend miteinander verbindbar sind.

10. Trichter nach einem der vorhergehenden Ansprüche,
**dadurch gekennzeichnet,**
**daß** der Kreisring (2) zumindest teilweise um den Umfang herum mit Markierungen versehen ist.

11. Trichter nach einem der vorhergehenden Ansprüche,
**dadurch gekennzeichnet,**
**daß** mehrere flache Kreisringe (2) übereinander gestapelt bevorratet sind.

12. Trichter nach Anspruch 11,
**dadurch gekennzeichnet,**
**daß** die Kreisringe (2) einen Abreißblock (6) bilden.
